(19)

Europäisches
Patentamt
European
Patent Office
Office européen
des brevets

(11) **EP 3 996 188 A1**

(12) **EUROPEAN PATENT APPLICATION**
published in accordance with Art. 153(4) EPC

(43) Date of publication:
**11.05.2022 Bulletin 2022/19**

(21) Application number: **20834367.3**

(22) Date of filing: **29.05.2020**

(51) International Patent Classification (IPC):
***H01M 50/20*** (2021.01)

(86) International application number:
**PCT/JP2020/021396**

(87) International publication number:
**WO 2021/002128 (07.01.2021 Gazette 2021/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.07.2019 JP 2019125208**

(71) Applicant: **GS Yuasa International Ltd.
Kisshoin, Minami-ku,
Kyoto-shi, Kyoto 601-8520 (JP)**

(72) Inventors:
• **INOUE, Tomoshige
Kyoto-shi, Kyoto 601-8520 (JP)**
• **MIYAWAKI, Yasutaka
Kyoto-shi, Kyoto 601-8520 (JP)**

(74) Representative: **Grünecker Patent- und
Rechtsanwälte
PartG mbB
Leopoldstraße 4
80802 München (DE)**

(54) **POWER STORAGE DEVICE**

(57) An energy storage apparatus (10) includes: an energy storage device (100); and a first spacer (200a) and a second spacer (200b) that sandwich the energy storage device (100). The first spacer (200a) includes: a first body portion (210a) facing the energy storage device (100); a first wall portion (a first side wall portion (220a)) protruding from the first body portion (210a) toward the second spacer (200b) along the energy storage device (100); and a first protruding portion (240a) protruding from the first wall portion. The second spacer (200b) includes: a second body portion (210b) facing the energy storage device (100); a second wall portion (a second side wall portion 220b)) protruding from the second body portion (210b) toward the first wall portion along the energy storage device (100); and a second protruding portion (240b) protruding from the second wall portion. The first protruding portion (240a) includes a spaced-apart portion (250a) where a distance between the first protruding portion (240a) and the second protruding portion (240b) is larger than a distance between the first wall portion and the second wall portion.

Fig. 5

## Description

TECHNICAL FIELD

The present invention relates to an energy storage apparatus which includes an energy storage device and two spacers that sandwich the energy storage device.

BACKGROUND ART

Conventionally, there has been popularly known an energy storage apparatus which includes an energy storage device and two spacers that sandwich the energy storage device. In Patent Document 1, there is disclosed an energy storage apparatus where energy storage devices and spacers are alternately stacked. The spacer has facing surfaces that face the energy storage devices disposed adjacently to the spacer, side surfaces, and leg portions that protrude from the side surfaces and support the spacer.

PRIOR ART DOCUMENT

PATENT DOCUMENT

Patent Document 1: JP-A-2013-41708

SUMMARY OF THE INVENTION

PROBLEMS TO BE SOLVED BY THE INVENTION

In the above-mentioned conventional energy storage apparatus, there is a concern that the energy storage device and an external conductive member may be electrically conductive with each other.

It is an object of the present invention to provide an energy storage apparatus capable of preventing an energy storage device and an external conductive member from becoming conductive with each other.

MEANS FOR SOLVING THE PROBLEMS

An energy storage apparatus according to one aspect of the present invention is an energy storage apparatus which includes: an energy storage device; and a first spacer and a second spacer that sandwich the energy storage device in a first direction, wherein the first spacer includes: a first body portion facing the energy storage device in the first direction; a first wall portion protruding from the first body portion toward the second spacer along the energy storage device; and a first protruding portion protruding from the first wall portion in a second direction that intersects with the first direction, the second spacer includes: a second body portion facing the energy storage device in the first direction; a second wall portion protruding from the second body portion toward the first wall portion along the energy storage device; and a second protruding portion protruding from the second wall portion in the second direction, wherein the first protruding portion includes a spaced-apart portion where a distance between the first protruding portion and the second protruding portion is larger than a distance between the first wall portion and the second wall portion in the first direction.

The present invention can be realized not only as such an energy storage apparatus but also as a spacer (a first spacer, a second spacer).

ADVANTAGES OF THE INVENTION

According to the energy storage apparatus of the present invention, it is possible to prevent the energy storage device and the external conductive member from becoming conductive with each other.

BRIEF DESCRIPTION OF THE DRAWINGS

Fig. 1 is a perspective view illustrating an external appearance of an energy storage apparatus according to an exemplary embodiment.
Fig. 2 is an exploded perspective view of the energy storage apparatus according to the present exemplary embodiment illustrating respective constitutional elements in a state where the energy storage apparatus is disassembled.
Fig. 3 is a perspective view illustrating an external appearance of an energy storage device according to the present exemplary embodiment.
Fig. 4 is a perspective view illustrating the configuration of an intermediate spacer according to the present exemplary embodiment.
Fig. 5 is a side view illustrating the positional relationship between two intermediate spacers according to the present exemplary embodiment.
Fig. 6 is a side view illustrating the configuration of an end spacer according to the present exemplary embodiment, and the positional relationship between the intermediate spacer and the end spacer according to the present exemplary embodiment.
Fig. 7 is a side view illustrating the configuration of two spacers (a first spacer and a second spacer) sandwiching an energy storage device according to a first modification of the present exemplary embodiment.
Fig. 8 is a side view illustrating the configuration of two spacers (a first spacer and a second spacer) sandwiching an energy storage device according to a second modification of the present exemplary embodiment.
Fig. 9 is a side view illustrating the configuration of two spacers (a first spacer and a second spacer) sandwiching the energy storage device according to a third modification of the present exemplary embodiment.

Fig. 10 is a side view illustrating the configuration of two spacers (a first spacer and a second spacer) sandwiching an energy storage device according to a fourth modification of the present exemplary embodiment.

Fig. 11 is a side view illustrating the configuration of two spacers (a first spacer and a second spacer) sandwiching an energy storage device according to a fifth modification of the present exemplary embodiment.

Fig. 12 is a top plan view illustrating the configuration of two spacers (a first spacer and a second spacer) sandwiching an energy storage device according to a sixth modification of the present exemplary embodiment.

Fig. 13 is a perspective view illustrating a configuration in which energy storage apparatuses according to a seventh modification of the present exemplary embodiment are stacked in the vertical direction.

Fig. 14 is a view for describing a distance between spaced-apart portions of spacer protruding portions of two spacers sandwiching an energy storage device.

## MODE FOR CARRYING OUT THE INVENTION

In the above-mentioned conventional energy storage apparatus, there is a concern that the energy storage device and an external conductive member may be electrically conductive with each other. In the energy storage apparatus disclosed in Patent Document 1, each of the spacers that are alternately arranged with the energy storage devices has a leg portion, and the leg portions of the respective spacers are arranged in the arrangement direction of the energy storage devices and the spacers. In view of the above, the inventors of the present application have found out that when a gap formed between the legs of two spacers that sandwich the energy storage device is small, there is a concern that a liquid such as water produced by dew condensation or the like intrudes into the gap from above the gap or the liquid creeps up through the gap from below so that the liquid is accumulated in the gap. When the liquid is accumulated in the gap, there is a concern that the energy storage devices and an external conductive member (such as a metal plate on which the energy storage apparatus is mounted) become conductive with each other through the liquid.

It is an object of the present invention to provide an energy storage apparatus capable of preventing an energy storage device and an external conductive member from becoming conductive with each other.

An energy storage apparatus according to one aspect of the present invention is an energy storage apparatus which includes: an energy storage device; and a first spacer and a second spacer that sandwich the energy storage device in a first direction, wherein the first spacer includes: a first body portion facing the energy storage device in the first direction; a first wall portion protruding from the first body portion toward the second spacer along the energy storage device; and a first protruding portion protruding from the first wall portion in a second direction that intersects with the first direction, the second spacer includes: a second body portion facing the energy storage device in the first direction; a second wall portion protruding from the second body portion toward the first wall portion along the energy storage device; and a second protruding portion protruding from the second wall portion in the second direction, wherein the first protruding portion includes a spaced-apart portion where a distance between the first protruding portion and the second protruding portion is larger than a distance between the first wall portion and the second wall portion in the first direction.

With such a configuration, in the energy storage apparatus, the first spacer includes the first wall portion protruding toward the second spacer along the energy storage device and the first protruding portion protruding from the first wall portion. The second spacer includes the second wall portion protruding toward the first wall portion along the energy storage device, and the second protruding portion protruding from the second wall portion. The first protruding portion includes the spaced-apart portion where the distance between the first protruding portion and the second protruding portion is larger than the distance between the first wall portion and the second wall portion. In this manner, the first protruding portion and the second protruding portion are formed on the first spacer and the second spacer, and the spaced-apart portion of the first protruding portion is formed such that the distance between the first protruding portion and the second protruding portion is larger than the distance between the first wall portion and the second wall portion. As a result, when a liquid such as water enters between the first protruding portion and the second protruding portion from above, the liquid easily falls at the position of the spaced-apart portion. On the other hand, it is difficult for a liquid such as water from below to creep up at the position of the spaced-apart portion and hence, it is difficult for the liquid to be accumulated between the first protruding portion and the second protruding portion. Accordingly, it is possible to prevent the liquid from being accumulated between the first protruding portion and the second protruding portion and hence, it is possible to prevent the energy storage device and an external conductive member (such as a metal plate on which the energy storage apparatus is mounted) from becoming conductive with each other.

The spaced-apart portion may include a first inclined surface that is inclined in a direction that the first inclined surface is disposed away from the second protruding portion as the first inclined surface is disposed away from the first wall portion.

In such a configuration, the spaced-apart portion of the first protruding portion of the first spacer includes the first inclined surface that is inclined in the direction that the first inclined surface is disposed away from the second protruding portion of the second spacer as the first inclined surface is disposed away from the first wall portion. By forming the first inclined surface on the spaced-apart portion of the first protruding portion in this manner, a liquid such as water is more likely to fall at the position of the spaced-apart portion. On the other hand, it is difficult for a liquid such as water from below to creep up at the position of the spaced-apart portion. As a result, a liquid is less likely to be accumulated between the first protruding portion and the second protruding portion and hence, it is possible to more effectively prevent the energy storage device and an external conductive member from being conductive with each other.

The second protruding portion may include a second inclined surface that is inclined in a direction that the second inclined surface is disposed away from the spaced-apart portion as the second inclined surface is disposed away from the second wall portion.

In such a configuration, the second protruding portion of the second spacer includes the second inclined surface that is inclined in the direction that the second inclined surface is disposed away from the spaced-apart portion of the first protruding portion of the first spacer as the second inclined surface is disposed away from the second wall portion. By forming the second inclined surface on the second protruding portion in this manner, a liquid such as water is more likely to fall at the position of the spaced-apart portion of the first protruding portion. On the other hand, it is more difficult for a liquid such as water from below to creep up at the position of the spaced-apart portion. As a result, a liquid is less likely to be accumulated between the first protruding portion and the second protruding portion and hence, it is possible to more effectively prevent the energy storage device and an external conductive member from being conductive with each other.

The first protruding portion may include a third inclined surface on a surface thereof opposite to the second protruding portion, wherein the third inclined surface is inclined in a direction that the third inclined surface approaches the second protruding portion as the third inclined surface is disposed away from the first wall portion.

In such a configuration, the first protruding portion of the first spacer includes the third inclined surface which is inclined in a direction that the third inclined surface approaches the second protruding portion as the third inclined surface is disposed away from the first wall portion on the surface of first protruding portion of the first spacer opposite to the second protruding portion of the second spacer. In this manner, by forming the third inclined surface on the surface of the first protruding portion on the side opposite to the second protruding portion, also on the side of the first protruding portion opposite to the second protruding portion, a liquid such as water from above is likely to fall. On the other hand, it is difficult for a liquid such as water from below to creep up. As a result, the liquid is less likely to be accumulated even on the side of the first protruding portion opposite to the second protruding portion and hence, it is possible to prevent the energy storage device and the external conductive member from becoming conductive with each other.

The spaced-apart portion may include a recessed portion that is recessed in a direction away from the second protruding portion.

In such a configuration, the spaced-apart portion of the first protruding portion of the first spacer includes the recessed portion recessed in the direction away from the second protruding portion of the second spacer. By forming the recessed portion in the spaced-apart portion of the first protruding portion in this manner, a liquid such as water is more likely to fall at the position of the spaced-apart portion. On the other hand, it is more difficult for a liquid such as water from below to creep up at the position of the spaced-apart portion. As a result, a liquid is less likely to be accumulated between the first protruding portion and the second protruding portion and hence, it is possible to more effectively prevent the energy storage device and an external conductive member from being conductive with each other.

Assuming that a distance between the first protruding portion and the second protruding portion in the first direction at the spaced-apart portion is set as a, a length of the spaced-apart portion in a third direction that intersects with the first direction and the second direction is set as b, a length of the spaced-apart portion in the second direction is set as h, a surface tension when a liquid that is disposed between the first protruding portion and the second protruding portion is brought into contact with air is set as σ, a contact angle between a wall surface of the spaced-apart portion and the liquid is set as θ, density of the liquid is set as ρ, and gravitational acceleration is set as g, the distance a between the first protruding portion and the second protruding portion in the first direction at the spaced-apart portion may satisfy a following formula.

## [Formula 1]

$$a > \frac{4b\sigma \cdot \cos\theta}{b\rho gh - 4\sigma \cdot \cos\theta}$$

The inventors of the present application have found out that, when the distance between the first protruding portion and the second protruding portion at the spaced-apart portion satisfies the above formula, even when a liquid such as water creeps up between the first protruding portion and the second protruding portion, the liquid does not creep up above the spaced-apart portion. As a result, it is possible to prevent the energy storage device and the external conductive member from becoming conductive with each other.

Hereinafter, energy storage apparatuses according to an exemplary embodiment (and modifications of the present exemplary embodiment) of the present invention are described with reference to drawings. The present exemplary embodiment described hereinafter describes a comprehensive or specific example of an energy storage apparatus. In the following exemplary embodiment, numerical values, shapes, materials, constitutional elements, arrangement positions and connection modes of the constitutional elements, manufacturing steps, the order of the manufacturing steps, and the like are provided as examples, and are not intended to limit the present invention. The respective drawings are schematic views, and the sizes and the like are not necessarily strictly illustrated. In the respective drawings, identical or substantially identical constitutional elements are given the same symbols.

In the following description and drawings, an arrangement direction along which a plurality of energy storage devices, a plurality of spacers and two end members are arranged, a direction along which long-side surfaces of a container of an energy storage device face each other, or a thickness direction of the container is defined as an X-axis direction. A direction along which a pair of electrode terminals (on a positive electrode side and a negative electrode side) of one energy storage device are arranged, a direction along which short-side surfaces of a container of the energy storage device face each other, or a direction along which two side members are arranged is defined as a Y-axis direction. A direction along which a container body and a lid of the energy storage device are arranged or a vertical direction is defined as a Z-axis direction. These X axis direction, Y axis direction, and Z axis direction are directions that intersect with each other (orthogonal to each other in this exemplary embodiment).

In the description made hereinafter, an X-axis plus direction indicates an arrow direction of the X axis, and an X-axis minus direction indicates a direction opposite to the X-axis plus direction. The same goes for the Y axis direction and the Z axis direction. In the following description, there may be a case where the X-axis direction is also referred to as a first direction, the Z-axis direction or the Z-axis minus direction is also referred to as a second direction, and the Y-axis direction is referred to as a third direction. Expressions indicating the relative directions or the relative postures such as "parallel" or "orthogonal" also include cases where such directions or postures are not considered as such directions or such postures in a strict meaning of the terms. A state where two directions are orthogonal to each other means not only a state where these two directions are completely orthogonal to each other but also a state where these two directions are substantially orthogonal to each other, that is, a state where these two directions are orthogonal to each other with slight difference of about a few percent.

(Exemplary embodiment)

[1 Overall description of energy storage apparatus 10]

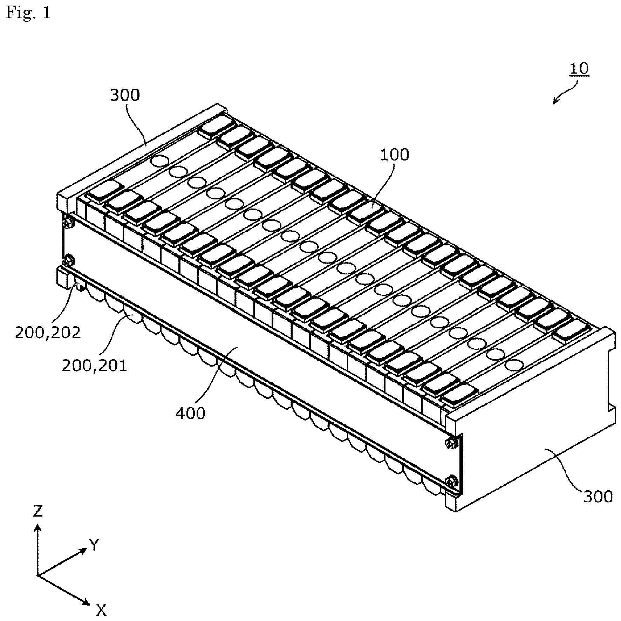

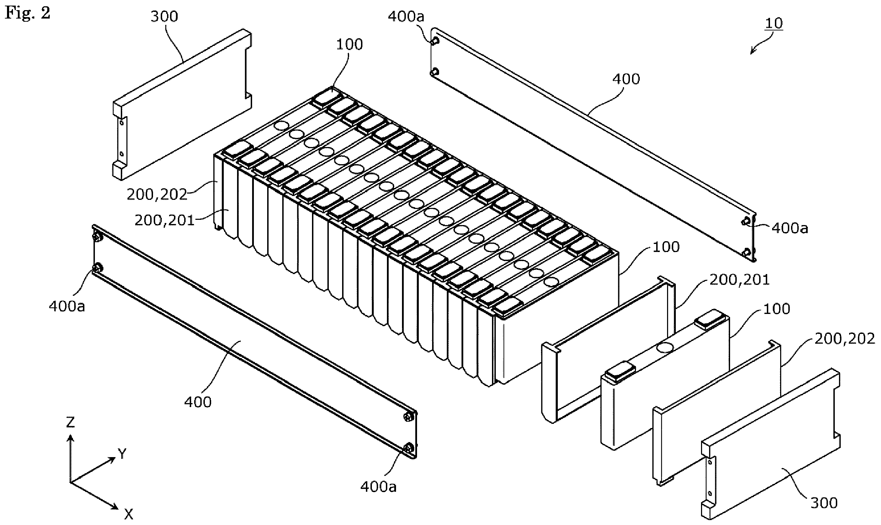

First, the overall description of the energy storage apparatus 10 according to the present exemplary embodiment will be made. Fig. 1 is a perspective view illustrating an external appearance of the energy storage apparatus 10 according to the present exemplary embodiment. Fig. 2 is an exploded perspective view of the energy storage apparatus 10 according to the present exemplary embodiment illustrating respective constitutional elements when the energy storage apparatus 10 is disassembled.

The energy storage apparatus 10 is an apparatus in which electricity is charged from the outside and from which electricity is discharged to the outside. In the present exemplary embodiment, the energy storage apparatus 10 has an approximately rectangular parallelepiped shape. The energy storage apparatus 10 is a battery module (assembled battery) used in an electricity storage application, a power source application, or the like. To be more specific, the energy storage apparatus 10 is used as a battery or the like for driving a mobile body such as an automobile, a motorcycle, a watercraft, a ship, a snowmobile, an agriculture machine, a construction machine, or a railway vehicle for an electric railway, or is used as a battery for starting an engine of the mobile body. As the above-mentioned automobile, an electric vehicle (EV), a hybrid electric vehicle (HEV), a plug-in hybrid electric vehicle (PHEV), and a gasoline automobile are exemplified. As the above-mentioned railway vehicle for an electric railway, an electric train, a monorail, and a linear motor car are exemplified. The energy storage apparatus 10 can also be used as a stationary battery or the like used as a home-use battery, a generator, or the like.

As illustrated in Fig. 1 and Fig. 2, the energy storage apparatus 10 includes: a plurality of (twenty in the present exemplary embodiment) energy storage devices 100; a plurality of (twenty-one in the present exemplary embodiment) spacers 200; two (a pair of) end members 300; and two (a pair of) side members 400. The energy storage apparatus 10 may include: an exterior body (a module case) that houses these plurality of energy storage devices 100; bus bars that electrically connect the energy storage devices 100 to each other; a bus bar frame (a bus bar plate) that performs positioning of the bus bars; and electrical equipment such as a circuit board or a relay that monitors a charging state or a discharging state of the energy storage devices 100. However, the illustration of these constitutional elements is omitted, and the detailed description of these constitutional elements is also omitted.

The energy storage device 100 is a secondary battery (single battery) that can charge electricity and discharge electricity. More specifically, the energy storage device 100 is a nonaqueous electrolyte secondary battery such as a lithium ion secondary battery. The energy storage device 100 has a flat rectangular parallelepiped shape (prismatic shape), and is disposed adjacently to the spacers 200. That is, the plurality of respective energy storage devices 100 and the plurality of respective spacers 200 are arranged in the X axis direction in a state where the energy storage devices 100 and the spacers 200 are alternately arranged. In the present exemplary embodiment, twenty energy storage devices 100 each are arranged between spacers 200 disposed adjacently to each other out of twenty-one spacers 200. The detailed configuration of the energy storage device 100 is described later.

The number of energy storage devices 100 is not limited to twenty, and may be one or plural other than twenty. The connection mode of the energy storage devices 100 is not in particular limited. All of energy storage devices 100 may be connected in series, or any of the energy storage devices 100 may be connected in parallel. The shape of the energy storage device 100 is not in particular limited to a rectangular parallelepiped shape. Other than the rectangular parallelepiped shape, the energy storage device 100 may have any shape such as a polygonal columnar shape, a circular columnar shape, an elliptical columnar shape, or an oblong circular columnar shape. Further, the energy storage device 100 may be a laminate-type energy storage device. The energy storage device 100 is not limited to a nonaqueous electrolyte secondary battery. The energy storage device 100 may be a secondary battery other than the nonaqueous electrolyte secondary battery, or may be a capacitor. The energy storage device 100 is not necessarily a secondary battery, and may be a primary battery that allows a user to use stored electricity even when the user does not charge the battery. Further, the energy storage device 100 may be a battery that uses a solid electrolyte.

The spacer 200 is a rectangular plate-shaped spacer. The spacer 200 is arranged on a side (the X-axis plus direction or the X-axis minus direction) of the energy storage device 100. The spacer 200 electrically insulates the energy storage device 100 from other members, and prevents the swelling of the energy storage device 100. The spacer 200 is formed of an insulating material such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene/perfluoroalkyl vinyl ether (PFA), polytetrafluoroethylene (PTFE), polyether sulfone (PES), an ABS resin, or a composite material of the above-mentioned materials. The spacer 200 may be made of a material other than a resin provided that the spacer 200 has electric insulation property. The spacer 200 may be made of ceramic, a mica plate formed using a dammer material formed by stacking and joining mica flakes, or the like. It may not always be the case where all of the plurality of spacers 200 are made of the same material.

The spacer 200 includes a plurality of (nineteen in the present exemplary embodiment) intermediate spacers 201 and two (a pair of) end spacers 202. The intermediate spacer 201 is a rectangular and flat spacer. The intermediate spacer 201 is sandwiched between two energy storage devices 100 disposed adjacently to each other and provides electrical insulation between two energy storage devices 100. The end spacer 202 is a rectangular and flat spacer. The end spacer 202 is arranged in a state where the end spacer 202 is sandwiched between the energy storage device 100 disposed at the end portion among the plurality of energy storage devices 100 and the end member 300. The end spacer 202 provides electrical insulation between the energy storage device 100 and the end member 300. The detailed description of the configuration of the spacers 200 (the intermediate spacer 201 and the end spacer 202) will be made later.

In the present exemplary embodiment, twenty energy storage devices 100 and nineteen (nineteen pieces of) intermediate spacers 201 are arranged alternately adjacently to each other in the X-axis direction. However, in a case where the number of energy storage devices 100 is other than twenty, the number of intermediate spacers 201 is also appropriately changed corresponding to the number of energy storage devices 100. When the number of energy storage devices 100 is one, the intermediate spacer 201 is not arranged, and two (a pair of) end spacers 202 that sandwich the one energy storage device 100 are arranged.

The end members 300 and the side members 400 are restraining members that press (restrain) the energy storage devices 100 from the outside in the arrangement direction (the X axis direction) of the plurality of energy storage devices 100. That is, the end members 300 and the side members 400 press (restrain) each energy storage device 100 included in the plurality of energy storage devices 100 from both sides of each energy device 100 in the arrangement direction of the plurality of energy storage devices 100 by sandwiching the plurality of energy storage devices 100 from both sides in the arrangement direction. From a viewpoint of ensuring a strength of the end members 300 and a strength of the side members 400, the end members 300 and the side members 400 are made of a metal-made material such as aluminum, an aluminum alloy, stainless steel, iron, or a plated steel plate. The material of the end member 300 and the material of the side member 400 are not in particular limited. For example, the end member 300 and the side member 400 may be made of material having a high strength and electric insulation property. Alternatively, insulation treatment may be applied to the end member 300 and the side member 400.

More specifically, the end members 300 are end plates (sandwiching members) having a flat block shape, which are disposed on both sides of the plurality of energy storage devices 100 and the plurality of spacers 200 from both sides in the X axis direction, and sandwich the plurality of energy storage devices 100 and the plurality of spacers 200 in the X axis direction, and hold the plurality of energy storage devices 100 and the plurality of spacers 200. The end member 300 may be an end plate having a plate shape or the like in place of an end plate having a block shape.

The side members 400 are each a long and flat side plate (restraining bar) whose both end portions are attached to the end members 300. The side members 400 restrain the plurality of energy storage devices 100 and the plurality of spacers 200. That is, the side members 400 are disposed in an extending manner in the X axis direction in a state where the side members 400 stride over the plurality of energy storage devices 100 and the plurality of spacers 200. The side members 400 impart a restraining force to the plurality of energy storage devices 100 and the like in the arrangement direction (X axis direction) of the plurality of energy storage devices 100 and the like. In the present exemplary embodiment, the pair of side members 400 is disposed on both sides of a set of the plurality of energy storage devices 100 and the like in the Y axis direction. The pair of respective side members 400 is mounted on the end portions in the Y axis direction of the pair of end members 300 at both end portions of the side members 400 in the X axis direction. With such a configuration, the pair of side members 400 restrains the plurality of energy storage devices 100 and the like by sandwiching the plurality of energy storage devices 100 and the like from both sides in the X axis direction and from both sides in the Y axis direction. The side member 400 may be formed of a member having a block shape, a rod shape, or the like in place of a side plate having a plate shape.

[2 Description of configuration of energy storage device 100]

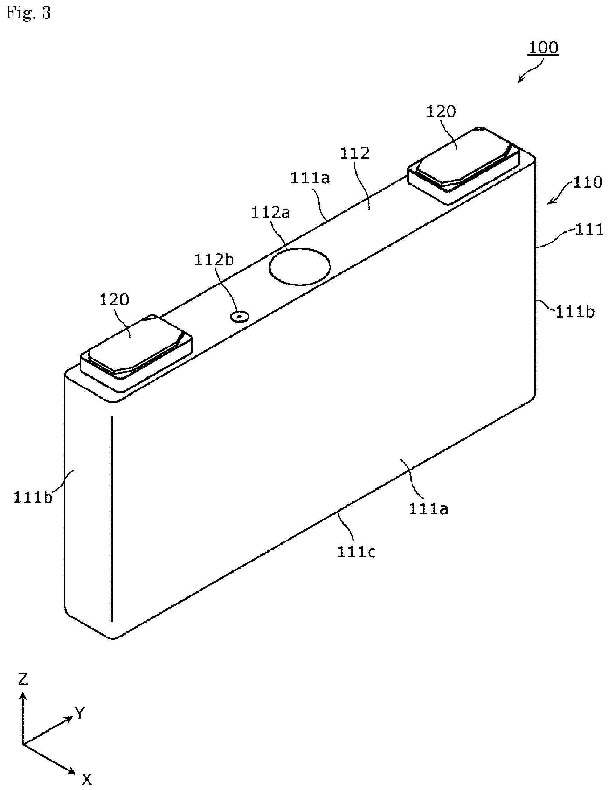

Next, the configuration of the energy storage device 100 is described in detail. All the energy storage devices 100 included in the energy storage apparatus 10 have the same configuration. Accordingly, the configuration of one energy storage device 100 will be described in detail below. Fig. 3 is a perspective view illustrating an external appearance of the energy storage device 100 according to the present exemplary embodiment.

As illustrated in Fig. 3, the energy storage device 100 includes: a container 110; and a pair of electrode terminals 120 (the electrode terminal 120 on a positive electrode side and the electrode terminal 120 on a negative electrode side). In the container 110, an electrode assembly, a pair of current collectors (a current collector on a positive electrode side and a current collector on a negative electrode side), an electrolyte solution (nonaqueous electrolyte), and the like are housed. However, these constitutional elements are not illustrated in the drawing. A kind of the electrolyte solution is not in particular limited provided that the performance of the energy storage device 100 is not impaired, and various kinds of electrolyte solutions can be selected. Spacers may be disposed on sides or the like of the current collector, and an insulating sheet that covers an outer surface of the container 110 may be disposed.

The container 110 is a container having a rectangular parallelepiped shape (prismatic shape). The container 110 includes: a container body 111 in which an opening is formed; and a lid body 112 that closes the opening of the container body 111. The container body 111 is a bottomed rectangular cylindrical member that forms a body portion of the container 110. The container body 111 has: two long side surface portions 111a on side surfaces of the container body 111 on both sides in the X axis direction; two short side surface portions 111b on side surfaces of the container body 111 on both sides in the Y axis direction; and a bottom surface portion 111c on the Z-axis minus direction side.

The long side surface portions 111a are rectangular and flat surface portions forming long side surfaces of the container 110. In other words, the long side surface portions 111a are surface portions disposed adjacent to the bottom surface portion 111c and the short side surface portions 111b, and each long side surface portion 111a has a larger area than each short side surface portion 111b. The short side surface portion 111b is a rectangular and flat surface portion forming the short side surface of the container 110. In other words, the short side surface portions 111b are surface portions disposed adjacent to the bottom surface portion 111c and the long side surface portions 111a, and each short side surface portion 111b has a smaller area than each long side surface portion 111a. The bottom surface portion 111c is a rectangular and flat surface portion forming the bottom surface of the container 110.

The lid body 112 is a plate-shaped member having a rectangular shape that forms a lid portion of the container 110. The lid body 112 is disposed on the Z-axis plus direction side of the container body 111. On the lid body 112, a gas release valve 112a that releases a pressure in the container 110 when such a pressure is increased, a solution filling portion 112b through which the container 110 is filled with an electrolyte solution, and the like are also mounted.

With such a configuration, the container 110 has the structure where the inside of the container 110 is sealed. Such sealed structure is obtained by housing the electrode assembly and the like in the container body 111 and, thereafter, by joining the container body 111 and the lid body 112 to each other by welding or the like. The material of the container 110 (the container body 111 and the lid body 112) is not in particular limited. However, for example, it is preferable that the container 110 be made of metal that is weldable (joinable) such as stainless steel, aluminum, an aluminum alloy, iron, or a plated steel plate.

The electrode terminals 120 are terminals (a positive electrode terminal and a negative electrode terminal) of the energy storage device 100 disposed on the lid body 112 of the container 110. The electrode terminals 120 are electrically connected to a positive electrode plate and a negative electrode plate of the electrode assembly via current collectors. That is, the electrode terminals 120 are members that are made of metal and are provided for discharging electricity stored in the electrode assembly to a space outside the energy storage device 100, and for charging electricity into a space in the energy storage device 100 to store electricity in the electrode assembly. The electrode terminals 120 are made of aluminum, an aluminum alloy, copper, a copper alloy, or the like.

The electrode assembly is an energy storage element (power generating element) formed by stacking a positive electrode plate, a negative electrode plate, and a separator to each other. The positive electrode plate that the electrode assembly includes is formed such that a positive active material layer is formed on a positive electrode substrate layer that is an elongated strip-shaped current collecting foil made of metal such as aluminum or an aluminum alloy. The negative electrode plate is formed such that a negative active material layer is formed on a negative electrode substrate layer that is an elongated strip-shaped current collecting foil made of metal such as copper or a copper alloy. As a positive active material used for forming the positive active material layer and a negative active material used for forming the negative active material layer, known materials can be appropriately used provided that these materials can occlude and discharge lithium ions.

The current collectors (the positive electrode current collector and the negative electrode current collector) are members having conductivity and are electrically connected to the electrode terminals 120 and the electrode assembly. The positive electrode current collector is made of aluminum, an aluminum alloy or the like substantially in the same manner as the positive electrode substrate layer of the positive electrode plate. The negative electrode current collector is made of copper, a copper alloy, or the like substantially in the same manner as the negative electrode substrate layer of the negative electrode plate. Between the lid body 112 and the electrode terminals 120 and the current collectors, a gasket is disposed. The gasket is an insulating member provided for ensuring electrical insulation and gas tightness between the lid body 112 and the electrode terminal 120 and the current collector.

[3 Description of configuration of spacer 200]

[3.1 Description of configuration of intermediate spacer 201]

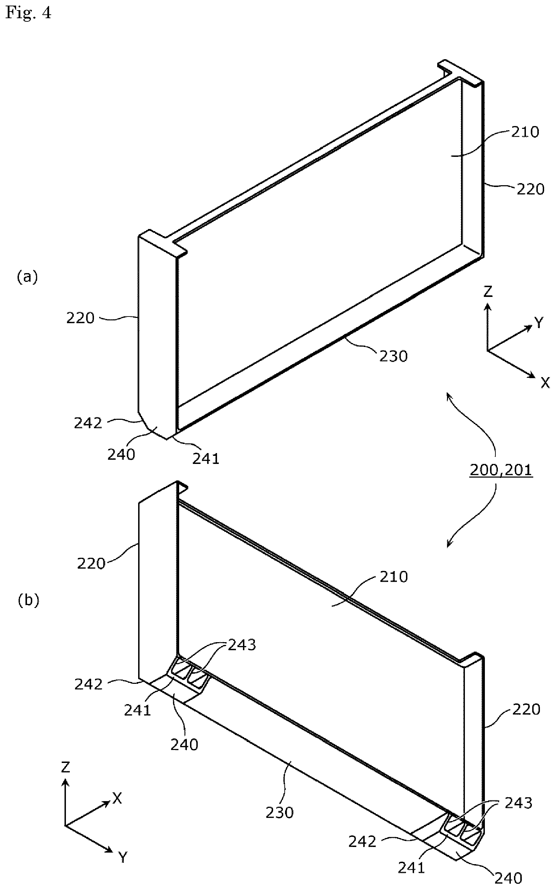

Next, the configuration of the spacer 200 (the intermediate spacer 201 and the end spacer 202) will be described in detail. First, the configuration of the intermediate spacer 201 will be described. All intermediate spacers 201 included in the energy storage apparatus 10 have substantially the same configuration. Accordingly, the configuration of one intermediate spacer 201 will be described in detail below. Fig. 4 is a perspective view illustrating the configuration of the intermediate spacer 201 according to the present exemplary embodiment. Specifically, (a) in Fig. 4 is an enlarged perspective view illustrating the intermediate spacer 201 illustrated in Fig. 2, and (b) in Fig. 4 is a perspective view illustrating the configuration of the intermediate spacer 201 in (a) in Fig. 4 when viewed from below (Z-axis minus direction).

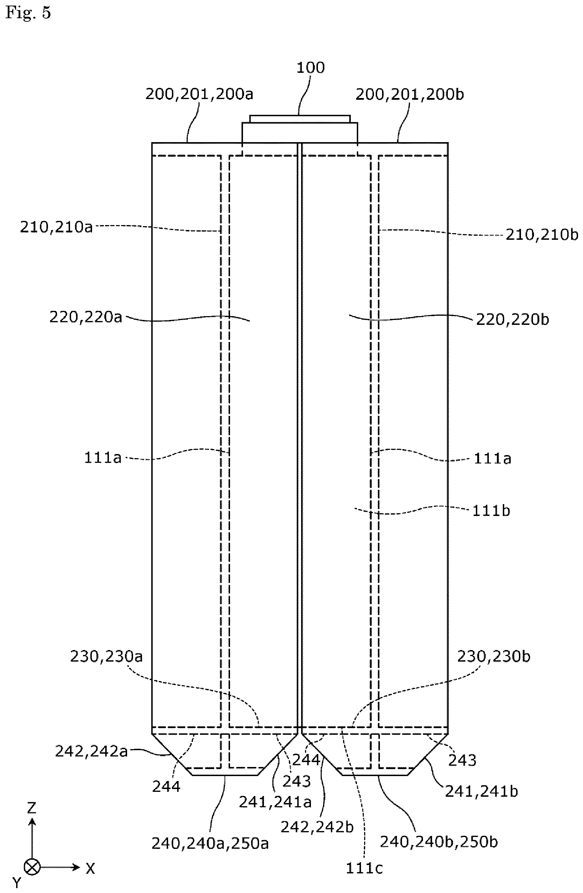

As illustrated in Fig. 4, the intermediate spacer 201 includes: a spacer body portion 210; spacer side wall portions 220; a spacer bottom wall portion 230; and spacer protruding portions 240. The spacer body portion 210 is a portion having a rectangular shape and a flat plate shape, and forms a body of the intermediate spacer 201. The spacer body portion 210 is disposed parallel to an YZ plane. In the present exemplary embodiment, the spacer body portion 210 is arranged so as to face the energy storage device 100 in the X-axis direction (first direction). That is, the spacer body portion 210 is arranged on an X-axis plus direction side or in an X-axis minus direction side of the energy storage device 100 in a state where the spacer body portion 210 covers an entire surface of the long side surface portion 111a of the container 110 of the energy storage device 100 (see Fig. 5).

The spacer side wall portions 220 are portions having a rectangular shape and a flat plate shape, protruding from the spacer body portion 210 in the X-axis direction, and extending in the Z-axis direction. The spacer side wall portions 220 are arranged parallel to the XZ plane. Specifically, the spacer side wall portions 220 protrude toward both sides in the X-axis direction at both ends from both end portions of the spacer body portion 210 in the Y-axis direction and extend in the Z-axis direction. In the present exemplary embodiment, the spacer side wall portions 220 are arranged along the short side surface portions 111b of the container 110 of the energy storage device 100 on both sides of the energy storage device 100 in the Y-axis direction. Specifically the spacer side wall portion 220 is arranged so as to face the energy storage device 100 in the Y-axis direction in a state where the spacer side wall portion 220 covers approximately half of the short side surface portion 111b of the container 110 of the energy storage device 100 on the X-axis plus direction side or the X-axis minus direction side (see Fig. 5).

The spacer bottom wall portion 230 is a portion having a rectangular shape and a flat plate-shape, protruding from the spacer body portion 210 in the X-axis direction, and extending in the Y-axis direction. The spacer bottom wall portion 230 is arranged parallel to the XY plane. Specifically, the spacer bottom wall portion 230 protrudes toward both sides in the X axis direction from the end portion of the spacer body portion 210 on the Z-axis minus direction side and extend portions in the Y axis direction. In the present exemplary embodiment, the spacer bottom wall portion 230 is arranged along the bottom surface portion 111c of the container 110 of the energy storage device 100 on the Z-axis minus direction side of the energy storage device 100. Specifically, the spacer bottom wall portion 230 is arranged so as to face the energy storage device 100 in the Z-axis direction in a state where the spacer bottom wall portion 230 covers approximately half of the bottom surface portion 111c of the container 110 of the energy storage device 100 on the X-axis plus direction side or on the X-axis minus direction side (see Fig. 5).

The spacer protruding portions 240 are arranged so as to protrude from the spacer side wall portions 220 in the Z-axis minus direction. Specifically, the spacer protruding portions 240 protrude in the Z-axis minus direction from both end portions in the Y-axis direction of the spacer bottom wall portion 230 and extend in the Y-axis direction. The spacer protruding portion 240 has: an inclined surface 241 on the surface on the X-axis plus direction side; and an inclined surface 242 on the surface on the X-axis minus direction side. The inclined surface 241 is a flat inclined surface that inclines in the X-axis minus direction as the inclined surface 241 extends portions in the Z-axis minus direction (the remoter the inclined surface 241 from the spacer side wall portion 220 and the spacer bottom wall portion 230). The inclined surface 242 is a flat inclined surface that inclines in the X-axis plus direction as the inclined surface 242 extends portions in the Z-axis minus direction (the remoter the inclined surface 242 from the spacer side wall portion 220 and the spacer bottom wall portion 230).

The inclined surface 241 is formed with recessed portions 243 that are recessed in the X-axis minus direction. The recessed portions 243 are recessed portions each having a rectangular shape when viewed from the X-axis direction, and two recessed portions 243 are formed on one inclined surface 241. In the same manner, the inclined surface 242 is also formed with two rectangular recessed portions 244 (see Fig. 5) that are recessed in the X-axis plus direction. The recessed portion 243 formed on the inclined surface 241 and the recessed portion 244 formed on the inclined surface 242 may be connected to each other by a through hole which is formed in the spacer protruding portion 240 in a penetrating manner in the X-axis direction.

[3.2 Description of positional relationship between two intermediate spacers 201]

Next, the positional relationship between two intermediate spacers 201 will be described. Fig. 5 is a side view illustrating the positional relationship between two intermediate spacers 201 according to the present exemplary embodiment. Specifically, Fig. 5 is a view of the configuration where the energy storage device 100 is sandwiched between two intermediate spacers 201 when viewed from the Y-axis minus direction.

As illustrated in Fig. 5, two intermediate spacers 201 are arranged on both sides of the energy storage device 100 in the X-axis direction. The intermediate spacer 201 arranged on the X-axis minus direction side of the energy storage device 100 is also referred to as a first spacer 200a, and the intermediate spacer 201 arranged on the X-axis plus direction side of the energy storage device 100 is also referred to as a second spacer 200b. That is, the first spacer 200a and the second spacer 200b are arranged so as to sandwich the energy storage device 100 in the X-axis direction (first direction).

The spacer body portion 210, the spacer side wall portions 220, the spacer bottom wall portion 230 and the spacer protruding portions 240 of the first spacer 200a are also referred to as a first body portion 210a, first side wall portions 220a, a first bottom wall portion 230a and first protruding portions 240a. The first side wall portion 220a is one example of the first wall portion. The spacer body portion 210, the spacer side wall portions 220, the spacer bottom wall portion 230 and the spacer protruding portions 240 of the second spacer 200b are also referred to as a second body portion 210b, second side wall portions 220b, a second bottom wall portion 230b and second protruding portions 240b. The second side wall portion 220b is one example of the second wall portion. The inclined surface 241 of the first protruding portion 240a is also referred to as a first inclined surface 241a, the inclined surface 242 of the second protruding portion 240b is also referred to as a second inclined surface 242b, and the inclined surface 242 of the first protruding portion 240a is referred to as a third inclined surface 242a, and the inclined surface 241 of the second protruding portion 240b is also referred to as a fourth inclined surface 241b.

In such a configuration, the first body portion 210a of the first spacer 200a is arranged so as to face the energy storage device 100 in the X-axis direction (first direction). That is, the first body portion 210a is arranged so as to face the long side surface portion 111a of the container 110 of the energy storage device 100 on the X-axis minus direction side.

The first side wall portions 220a (first wall portions) and the first bottom wall portion 230a of the first spacer 200a are arranged so as to protrude from the first body portion 210a toward the second spacer 200b along the energy storage device 100. That is, with respect to the first side wall portions 220a and the first bottom wall portion 230a, parts of these portions on the X-axis plus direction side are arranged to protrude from the first body portion 210a toward the second side wall portions 220b and the second bottom wall portion 230b of the second spacer 200b (toward the X-axis plus direction). With respect to the first side wall portions 220a and the first bottom wall portion 230a, parts of these portions on the X-axis minus direction side are arranged so as to protrude from the first body portion 210a toward a side opposite to the second side wall portions 220b and the second bottom wall portion 230b of the second spacer 200b (toward the X-axis minus direction).

The second body portion 210b of the second spacer 200b is arranged so as to face the energy storage device 100 in the X-axis direction (first direction). That is, the second body portion 210b is arranged so as to face the long side surface portion 111a of the container 110 of the energy storage device 100 on the X-axis plus direction side.

The second side wall portions 220b (second wall portions) and the second bottom wall portion 230b of the second spacer 200b are arranged so as to protrude from the second body portion 210b toward the first spacer 200a along the energy storage device 100. That is, with respect to the second side wall portions 220b and the second bottom wall portion 230b, parts of these portions on the X-axis minus direction side are arranged so as to protrude from the second body portion 210b toward the first side wall portions 220a and the first bottom wall portion 230a of the first spacer 200a (toward the X-axis minus direction). With respect to the second side wall portions 220b and the second bottom wall portion 230b, parts of these portions on the X-axis plus direction side are arranged so as to protrude from the second body portion 210b toward a side opposite to the first side wall portions 220a and the first bottom wall portion 230a of the first spacer 200a (toward the X-axis plus direction).

In this manner, each of the first spacer 200a and the second spacer 200b is formed so as to cover the entire surface of one long side surface portion 111a, substantially halves of both short side surface portions 111b, and a substantially half of the bottom surface portion 111c of the container 110 of the energy storage device 100. With such a configuration, the first spacer 200a and the second spacer 200b that sandwich the energy storage device 100 cover substantially the entire surfaces of both long side surface portions 111a, both short side surface portions 111b, and the bottom surface portion 111c of the energy storage device 100.

The first protruding portions 240a of the first spacer 200a are arranged so as to protrude from the first side wall portion 220a in the Z-axis minus direction (the second direction intersecting with the first direction). In the same manner, the second protruding portions 240b of the second spacer 200b are arranged so as to protrude from the second side wall portions 220b in the Z-axis minus direction (second direction).

The first protruding portion 240a has a spaced-apart portion 250a where a distance between the first protruding portion 240a and the second protruding portion 240b is larger than a distance between the first side wall portion 220a and the second side wall portion 220b in the X-axis direction (first direction). In the present exemplary embodiment, the first side wall portion 220a and the second side wall portion 220b are disposed close to each other in a state where a substantially uniform slight gap is formed over the entire length in the Z-axis direction such that the first side wall portion 220a and the second side wall portion 220b cover substantially the entire surface of the short side surface portion 111b of the container 110 of the energy storage device 100. The first side wall portion 220a and the second side wall portion 220b may be arranged such that the first side wall portion 220a and the second side wall portion 220b are partially or wholly brought into contact with each other. The first protruding portion 240a and the second protruding portion 240b are formed such that a distance between the first protruding portion 240a and the second protruding portion 240b is gradually expanded in the Z-axis minus direction from the first side wall portion 220a and the second side wall portion 220b. With such a configuration, as a whole, the distance between the first protruding portion 240a and the second protruding portion 240b is larger than the distance between the first side wall portion 220a and the second side wall portion 220b. That is, the entirety of the first protruding portion 240a forms the spaced-apart portion 250a.

The distance between the first protruding portion 240a and the second protruding portion 240b is a distance between an end edge of the first protruding portion 240a on the X-axis plus direction side and an end edge of the second protruding portion 240b on the X-axis minus direction side (that is, a length of a line segment parallel to the X-axis direction which connects both end edges). The same applies to the distance between the protruding portions (or spaced-apart portions) described hereinafter.

Accordingly, the spaced-apart portion 250a (the first protruding portion 240a) has a first inclined surface 241a that is inclined in a direction that the first inclined surface 241a is disposed away from the second protruding portion 240b (a distance between the first inclined surface 241a and the second protruding portion 240b is increased) as the first inclined surface 241a is disposed away from the first side wall portion 220a. The spaced-apart portion 250a (the first protruding portion 240a) has the third inclined surface 242a on a surface thereof opposite to the second protruding portion 240b. The third inclined surface 242a is inclined in a direction that the third inclined surface 242a approaches the second protruding portion 240b as the third inclined surface 242a is disposed away from the first side wall portion 220a. The spaced-apart portion 250a (the first protruding portion 240a) has a recessed portion 243 recessed in a direction away from the second protruding portion 240b, and has a recessed portion 244 recessed in a direction approaching the second protruding portion 240b.

Also with respect to the second protruding portion 240b, in the same manner, in the X-axis direction (the first direction), the second protruding portion 240b has a spaced-apart portion 250b where the distance between the second protruding portion 240b and the first protruding portion 240a is larger than the distance between the first side wall portion 220a and the second side wall portion 220b. The entirety of the second protruding portion 240b also forms the spaced-apart portion 250b.

Accordingly, the spaced-apart portion 250b (the second protruding portion 240b) has a second inclined surface 242b that is inclined in a direction that the second inclined surface 242b is disposed away from the spaced-apart portion 250a (a distance between the second inclined surface 242b and the spaced-apart portion 250a is increased) as the second inclined surface 242b is disposed away from the second side wall portion 220b. The spaced-apart portion 250b (the second protruding portion 240b) has the fourth inclined surface 241b on a surface thereof on a side opposite to the spaced-apart portion 250a where the fourth inclined surface 241b is inclined in a direction that the fourth inclined surface 241b approaches the spaced-apart portion 250a as the fourth inclined surface 241b is disposed away from the second side wall portion 220b. The spaced-apart portion 250b (the second protruding portion 240b) has the recessed portion 244 recessed in the direction away from the spaced-apart portion 250a, and the recessed portion 243 recessed in the direction approaching the spaced-apart portion 250a.

When the distance (gap) between the first side wall portion 220a and the second side wall portion 220b is not uniform over the Z-axis direction, as the distance between the first side wall portion 220a and the second side wall portion 220b described above, the distance at the position closest to the first protruding portion 240a and the second protruding portion 240b can be adopted. That is, it is sufficient that the distance between the spaced-apart portion 250a and the spaced-apart portion 250b be larger than the distance (gap) between the first side wall portion 220a and the second side wall portion 220b at the position closest to the first protruding portion 240a and the second protruding portion 240b. The spaced-apart portions described hereinafter are also defined in the same manner.

[3.3 Explanation of configuration of end spacer 202 and positional relationship with intermediate spacer 201]

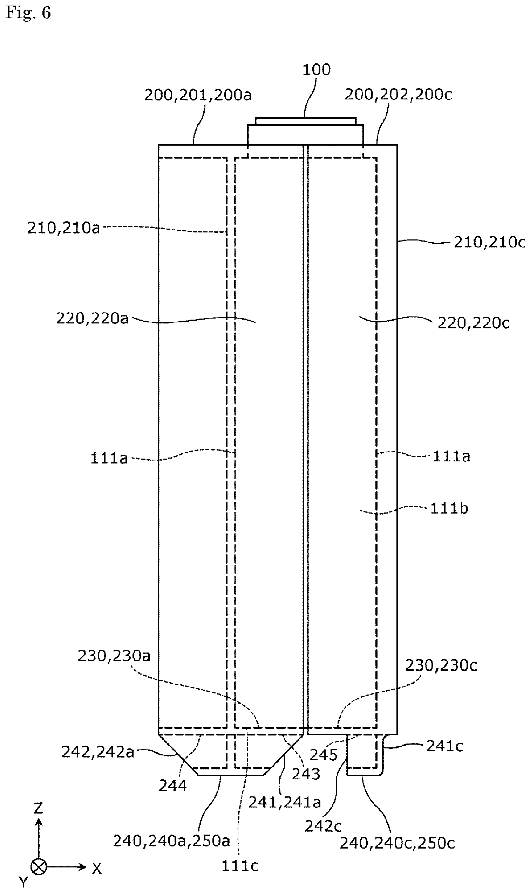

Next, the configuration of the end spacer 202 and the positional relationship between the intermediate spacer 201 and the end spacer 202 will be described. Fig. 6 is a side view illustrating the configuration of the end spacer 202 according to the present exemplary embodiment and the positional relationship between the intermediate spacer 201 and the end spacer 202. Specifically, Fig. 6 is a view of a configuration in which the energy storage device 100 is sandwiched between the intermediate spacer 201 and the end spacer 202 when viewed from the Y-axis minus direction.

As illustrated in Fig. 6, in the same manner as the intermediate spacer 201, the end spacer 202 has: a spacer body portion 210; a spacer side wall portion 220; a spacer bottom wall portion 230; and a spacer protruding portion 240. The end spacer 202 is arranged in place of the second spacer 200b in Fig. 5. Accordingly, the end spacer 202 is also referred to as a second spacer 200c. That is, the first spacer 200a and the second spacer 200c are arranged so as to sandwich the energy storage device 100 in the X-axis direction (first direction). Accordingly, the spacer body portion 210, the spacer side wall portions 220, the spacer bottom wall portion 230 and the spacer protruding portions 240 of the second spacer 200c are also referred to as a second body portion 210c, second side wall portions 220c, a second bottom wall portion 230c and second protruding portions 240c. The second side wall portion 220c is an example of the second wall portion.

The second body portion 210c has substantially the same configuration as the second body portion 210b of the second spacer 200b described above. The second side wall portions 220c and the second bottom wall portion 230c have substantially the same configuration as the parts of the second side wall portions 220b and the second bottom wall portion 230b of the second spacer 200b on the X-axis minus direction side.

The second protruding portion 240c is arranged so as to protrude from the second side wall portion 220c in the Z-axis minus direction (second direction). Specifically, in the same manner as the second protruding portion 240b of the second spacer 200b described above, the second protruding portion 240c protrudes in the Z-axis minus direction from both end portions of the second bottom wall portion 230c in the Y-axis direction, and extend in the Y-axis direction. Unlike the second protruding portion 240b, the second protruding portion 240c is a protruding portion having a rectangular shape as viewed from the Y-axis direction where the second protruding portion 240c has a smaller width in the X-axis direction than the second side wall portion 220c. That is, the second protruding portion 240c has a side surface 241c parallel to the YZ plane on the surface on the X-axis plus direction side, and has a side surface 242c parallel to the YZ plane on the surface on the X-axis minus direction side. The side surface 242c is formed with a rectangular recessed portion 245 that is recessed in the X-axis plus direction (direction away from the spaced-apart portion 250a). The second protruding portion 240c may be formed with a through hole that penetrates the second protruding portion 240c in the X-axis direction in place of the recessed portion 245.

In such a configuration, the second protruding portion 240c has the spaced-apart portion 250c where the distance between the second protruding portion 240c and the first protruding portion 240a is larger than the distance between the first side wall portion 220a and the second side wall portion 220c in the X-axis direction (first direction). That is, the entirety of the second protruding portion 240c forms the spaced-apart portion 250c. The spaced-apart portion 250c has a shape recessed from the second side wall portion 220c in the X-axis plus direction. Accordingly, it is safe to say that the spaced-apart portion 250c has a recessed portion recessed in the direction away from the spaced-apart portion 250a.

[3.4 Description of distance between spaced-apart portions disposed adjacent to each other]

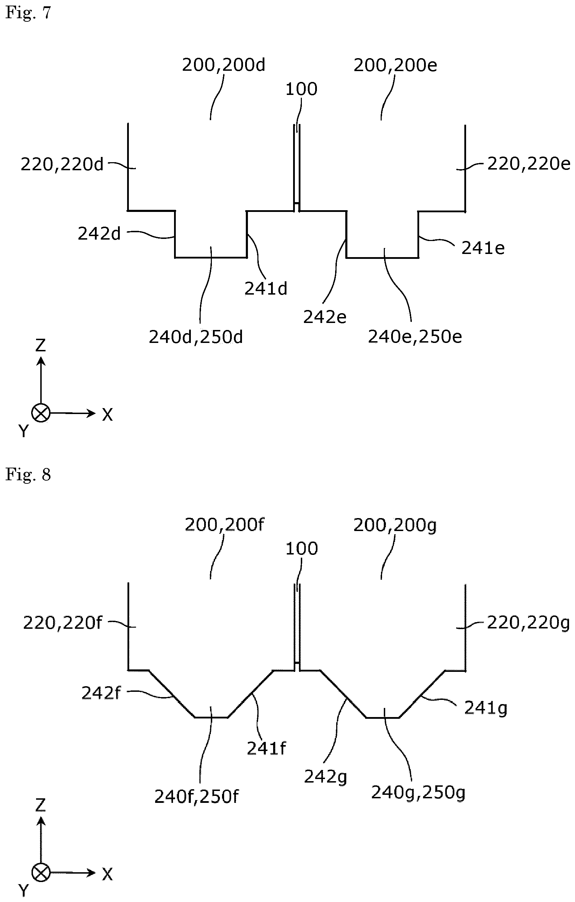

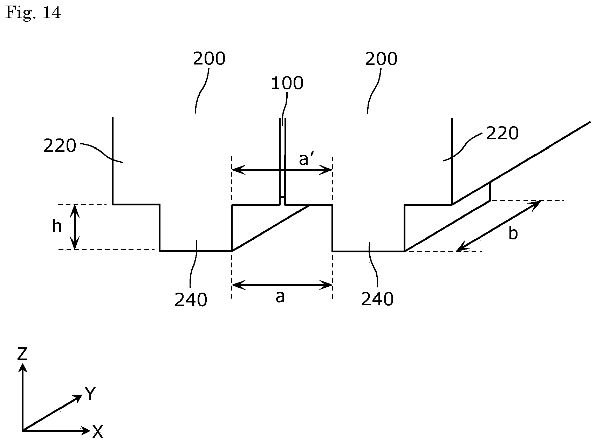

Next, the description is made with respect to the distance between the spaced-apart portions (spaced-apart portion 250a and the spaced-apart portion 250b or 250c) of the protruding portions disposed adjacent to each other (first protruding portion 240a and second protruding portion 240b or 240c). Fig. 14 is a view illustrating the distance between the spaced-apart portions of the spacer protruding portions 240 in the two spacers 200 that sandwich the energy storage device 100. In Fig. 14, as an example, a case is illustrated where a profile of the space between the spaced-apart portions when the space is projected from the Y-axis direction is a rectangular shape (rectangle) (a case illustrated in Fig. 7 described later).

A height (a liquid column height) h' of a liquid (water or the like) that creeps up between the spaced-apart portions of the protruding portions disposed adjacent to each other due to a capillary phenomenon is determined based on a balance between a length of an interface between wall surfaces of the spaced-apart portions with which the liquid is brought into contact, a force $F_y$ that acts in the vertical direction due to a surface tension $\sigma$, and gravity W that acts on the liquid column. That is, assuming that the lengths b of the spaced-apart portions in the Y-axis direction (see Fig. 14) are equal, the smaller an area of the profile of the space between the spaced-apart portions when the space is projected in the Y-axis direction, the higher the liquid column height h' becomes.

In other words, this implies that, assuming that the profile has the same shape, the smaller the distance a between the spaced-apart portions (see Fig. 14), the larger the liquid column height h' becomes. Alternatively, this implies that assuming that the distance a between the spaced-apart portions is the same, the liquid column height h' is gradually decreased in order that the liquid column height h' is the largest when the profile is a triangle (a'= 0) as illustrated in Fig. 5. Then, the liquid column height h' when the profile is a trapezoid (a> a') illustrated in Fig. 8 described later follows. Then, the liquid column height h' when the profile is a rectangular shape (a = a') illustrated in Fig. 7 described later follows. In the drawing, symbol a' indicates a distance between upper end portions of the spaced-apart portions (see Fig. 14). That is, assuming that a length (height) h of the spaced-apart portion in the Z-axis direction (see Fig. 14) is the same, by studying the case where the profile is a triangle, it is considered that the liquid column height h' becomes maximum. Accordingly, assuming the distance a between the spaced-apart portions as a base of the triangle, when the spaced-apart portions are spaced apart from each other more than a, the relationship between the height h of the spaced-apart portion and the liquid column height h' becomes h> h' and hence, theoretically, there is no possibility that creeping liquid (water or the like) reaches the spacer bottom wall portion 230 of the spacer.

However, when the profile is a triangle or a trapezoid, a length of an interface changes according to a liquid column height and hence, the calculation is complicated. Accordingly, the case is studied by assuming the distance a between the spaced-apart portions at the base of the triangle as the length of the interface. This study of the case is equal to the study of the case where the profile is assumed as a rectangle. However, a force $F_y$ that acts in the vertical direction is proportional to the length of the interface and hence, the force $F_y$ can be estimated to the maximum by studying the case where the profile is a rectangle. When the profile is a triangle or a trapezoid, a wall surface of the spaced-apart portion is not vertical and forms an inclined surface. However, a force $F_y$ that acts in the vertical direction becomes maximum when the profile is a rectangle where the wall surface is vertical. Accordingly, by studying the case where the profile is a rectangle, the force $F_y$ can be estimated to the maximum. That is, by studying the case where the profile is a rectangle, the calculation of a force $F_y$ that acts in the vertical direction can be estimated to the maximum. On the other hand, the gravity W that acts on a liquid column becomes minimum when the profile is a triangle. Accordingly, by studying both cases, the liquid column height h' can be estimated to the maximum.

Next, the steps of calculating the distance a between the spaced-apart portions in the X-axis direction will be described. A force that acts between a liquid surface to which a liquid such as water generated in the energy storage apparatus 10 due to dew condensation or the like creeps up and a wall surface that forms the spaced-apart portion is determined based on a length of an interface between the liquid surface and the wall surface and a surface tension. The study of a force $F_y$ that acts in the vertical direction may be made based on the case where the profile is a rectangle when the space between the spaced-apart portions is projected in the Y-axis direction. Accordingly, a following formula is established.

### [Formula 2]

$$F_y = 2(a + b)\sigma \cdot \cos\theta$$

In Formula 2, a is a distance between the spaced-apart portions in the X-axis direction, b is a length of the spaced-apart portion in the Y-axis direction, and $\sigma$ is a surface tension when a liquid (water or the like) that creeps up between the spaced-apart portions is brought into contact with air, $\theta$ is a contact angle between a wall surface of the spaced-apart portion and the liquid.

Although there are no wall surfaces at both end portions of a space between the spaced-apart portions in the Y-axis direction, a higher liquid column height h' can be estimated by studying a case where the space between the spaced-apart portions is a closed space by assuming that there exist wall surfaces which are contiguous with the wall surfaces of the spaced-apart portions. In this case, the distance a between the spaced-apart portions in the X-axis direction can be studied under the maximum condition.

On the other hand, the gravity W that acts on a liquid column between the spaced-apart portions is determined based on a volume and density of a liquid (water or the like) that creeps up between the spaced-apart portions and the gravitational acceleration. The gravity can be studied preferably in the case where the profile when the space between the spaced-apart portions is projected from the Y-axis direction is a triangle. Accordingly, assuming that the length (height) h of the spaced-apart portion in the Z-axis direction and the height (liquid column height) h' of a liquid (water, or the like) that creeps up between the spaced-apart portions are equal, the following Formula 3 is established.

[Formula 3]

$$W = \frac{abh}{2}\rho g$$

In Formula 3, g is the gravitational acceleration, and $\rho$ is the density of a liquid (water or the like) that creeps up between the spaced-apart portions.

Because the force $F_y$ and the gravity W balance each other, the following Formula 4 is established.

[Formula 4]

$$2(a + b)\sigma \cdot cos\,\theta = \frac{abh}{2}\rho g$$

By transforming this Formula 4, the following Formula 5 is obtained.

[Formula 5]

$$a = \frac{4b\sigma \cdot cos\,\theta}{b\rho gh - 4\sigma \cdot cos\,\theta}$$

That is, the following Formula 6 is derived.

[Formula 6]

$$a > \frac{4b\sigma \cdot cos\,\theta}{b\rho gh - 4\sigma \cdot cos\,\theta}$$

That is, it is desirable that the above-mentioned formulae are satisfied in the case where, the distance between the first protruding portion of the first spacer and the second protruding portion of the second spacer in the X-axis direction (first direction) at the spaced-apart portion is set as a, the length of the spaced-apart portion in the Y-axis direction (the third direction that intersects with the first direction and the second direction) is set as b, the length (height) of the spaced-apart portion in the Z-axis direction (second direction) is set as h, a surface tension when a liquid (water or the like) that is disposed between the first protruding portion and the second protruding portion is brought into contact with air is set as $\sigma$, a contact angle between a wall surface of the spaced-apart portion and the liquid is set as $\theta$, the density of the liquid is set as $\rho$, and the gravitational acceleration is set as g. As a result, the relationship between the length (height) h of the spaced-apart portion in the Z-axis direction (second direction) and the height (liquid column height) h' of the liquid (water or the like) that creeps up between the spaced-apart portions never fails to become h> h'. Accordingly, theoretically, there is no possibility that a creeping liquid (water or the like) reaches the spacer bottom wall portion 230.

[4 Description of advantageous effects]

As described above, according to the energy storage apparatus 10 according to the present exemplary embodiment of the present invention, the first spacer 200a includes the first side wall portion 220a (first wall portion) protruding toward the second spacer 200b along the energy storage device 100 and the first protruding portion 240a protruding from the first side wall portion 220a. The second spacer 200b includes the second side wall portion 220b (second wall portion) protruding toward the first side wall portion 220a along the energy storage device 100, and the second protruding portion 240b protruding from the second side wall portion 220b. The first protruding portion 240a includes the spaced-apart portion 250a where the distance between the first protruding portion 240a and the second protruding portion 240b is larger than the distance between the first side wall portion 220a and the second side wall portion 220b. In this manner, the first protruding portion 240a and the second protruding portion 240b are formed on the first spacer 200a and the second spacer 200b, and the spaced-apart portion 250a of the first protruding portion 240a is formed such that the distance between the first protruding portion 240a and the second protruding portion 240b is larger than the distance between the first side wall portion 220a and the second side wall portion 220b. As a result, when a liquid such as water enters between the first protruding portion 240a and the second protruding portion 240b from above, the liquid easily falls at the position of the spaced-apart portion 250a. On the other hand, it is difficult for a liquid such as water from below to creep up at the position of the spaced-apart portion 250a and hence, it is difficult for the liquid to be accumulated between the first protruding portion 240a and the second protruding portion 240b. Accordingly, it is possible to prevent the liquid from being accumulated between the first protruding portion 240a and the second protruding portion 240b and hence, it is possible to prevent the energy storage device 100 and an external conductive member (such as a metal plate on which the energy storage apparatus 10 is mounted) from becoming conductive with each other. As a result, the electrical insulation performance (insulation resistance performance and withstand voltage performance) can be improved. The same applies to the spaced-apart portion 250b.

The spaced-apart portion 250a of the first protruding portion 240a of the first spacer 200a includes the first inclined surface 241a that is inclined in the direction that the first inclined surface 241a is disposed away from the second protruding portion 240b of the second spacer 200b as the first inclined surface 241a is disposed away from the first side wall portion 220a. By forming the first inclined surface 241a on the spaced-apart portion 250a of the first protruding portion 240a in this manner, a liquid such as water is more likely to fall at the position of the spaced-apart portion 250a. On the other hand, it is difficult for a liquid such as water from below to creep up at the position of the spaced-apart portion 250a. As a result, a liquid is less likely to be accumulated between the first protruding portion 240a and the second protruding portion 240b and hence, it is possible to more effectively prevent the energy storage device 100 and an external conductive member from being conductive with each other.

The second protruding portion 240b of the second spacer 200b includes the second inclined surface 242b that is inclined in the direction that the second inclined surface 242b is disposed away from the spaced-apart portion 250a of the first protruding portion 240a of the first spacer 200a as the second inclined surface 242b is disposed away from the second side wall portion 220b. By forming the second inclined surface 242b on the second protruding portion 240b in this manner, a liquid such as water is more likely to fall at the position of the spaced-apart portion 250a of the first protruding portion 240a. On the other hand, it is more difficult for a liquid such as water from below to creep up at the position of the spaced-apart portion 250a. As a result, a liquid is less likely to be accumulated between the first protruding portion 240a and the second protruding portion 240b and hence, it is possible to more effectively prevent the energy storage device 100 and an external conductive member from being conductive with each other.

The first protruding portion 240a of the first spacer 200a includes the third inclined surface 242a which is inclined in the direction that the first protruding portion 240a approaches the second protruding portion 240b as the third inclined surface 242a is disposed away from the first side wall portion 220a on the surface of the first spacer 200a opposite to the second protruding portion 240b of the second spacer 200b. In this manner, by forming the third inclined surface 242a on the surface of the first protruding portion 240a on the side opposite to the second protruding portion 240b, also on the side of the first protruding portion 240a opposite to the second protruding portion 240b, a liquid such as water from above is likely to fall. On the other hand, it is difficult for a liquid such as water from below to creep up. As a result, the liquid is less likely to be accumulated even on the side of the first protruding portion 240a opposite to the second protruding portion 240b and hence, it is possible to prevent the energy storage device 100 and the external conductive member from becoming conductive with each other. The same applies to the fourth inclined surface 241b of the second protruding portion 240b of the second spacer 200b.

The spaced-apart portion 250a of the first protruding portion 240a of the first spacer 200a includes the recessed portion 243 recessed in the direction away from the second protruding portion 240b of the second spacer 200b. By forming the recessed portion 243 in the spaced-apart portion 250a of the first protruding portion 240a in this manner, a liquid such as water is more likely to fall at the position of the spaced-apart portion 250a. On the other hand, it is more difficult for a liquid such as water from below to creep up at the position of the spaced-apart portion 250a. As a result, a liquid is less likely to be accumulated between the first protruding portion 240a and the second protruding portion 240b and hence, it is possible to more effectively prevent the energy storage device 100 and an external conductive member from being conductive with each other. The same applies to the recessed portion 244 of the spaced-apart portion 250a and the recessed portions 243 and 244 of the spaced-apart portion 250b.

The inventors of the present application have found out that, in a case where the distance between the first protruding portion 240a and the second protruding portion 240b at the spaced-apart portion 250a satisfies the above-mentioned formula, even when a liquid such as water creeps up between the first protruding portion 240a and the second protruding portion 240b, the liquid does not creep up above the spaced-apart portion 250a. As a result, it is possible to prevent the energy storage device 100 and the external conductive member from becoming conductive with each other.

The above-mentioned advantageous effects on the first spacer 200a and the second spacer 200b can be applied to the first spacer 200a and the second spacer 200c in the same manner.

[5 Description of modifications]

(Modification 1)

Next, a modification 1 of the above-mentioned exemplary embodiment will be described. Fig. 7 is a side view illustrating the configuration of two spacers 200 (first spacer 200d and second spacer 200e) that sandwich an energy storage device 100 according to the modification 1 of the present exemplary embodiment. Specifically, Fig. 7 is a view corresponding to a portion of Fig. 5 or Fig. 6 on a minus direction side of a Z axis.

As illustrated in Fig. 7, a first spacer 200d according to the present modification includes a first protruding portion 240d (a spaced-apart portion 250d) in place of the first protruding portion 240a (the spaced-apart portion 250a) of the first spacer 200a in the above-mentioned exemplary embodiment. A second spacer 200e according to the present modification includes a second protruding portion 240e (a spaced-apart portion 250e) in place of the second protruding portion 240b or 240c (the spaced-apart portion 250b or 250c) of the second spacer 200b or 200c in the above-mentioned exemplary embodiment. Other configurations are substantially the same as the corresponding configurations in the above-mentioned exemplary embodiment and hence, the detailed description of other configurations will be omitted.

A width of a first protruding portion 240d (spaced-apart portion 250d) in an X-axis direction is smaller than a width of a first side wall portion 220d in the same manner as the second protruding portion 240c (spaced-apart portion 250c) of the second spacer 200c in the above-mentioned exemplary embodiment. The first protruding portion 240d (spaced-apart portion 250d) is a rectangular protruding portion when viewed in a Y-axis direction. That is, the first protruding portion 240d has a side surface 241d parallel to a YZ plane on a surface of the first protruding portion 240d on an X-axis plus direction, and also has a side surface 242d parallel to the YZ plane on a surface of the first protruding portion 240d on an X-axis minus direction. In the same manner, a second protruding portion 240e (a spaced-apart portion 250e) is a protruding portion having rectangular shape when viewed from the Y-axis direction. A width of the second protruding portion 240e (a spaced-apart portion 250e) in the X-axis direction is smaller than a width of the second side wall portion 220e in the X-axis direction. The second protruding portion 240e (a spaced-apart portion 250e) has side surfaces 241e and 242e on both surfaces in the X-axis direction parallel to the YZ plane.

The first protruding portion 240d (the spaced-apart portion 250d) has a shape recessed from the first side wall portion 220d in the X-axis minus direction. Accordingly, it is also safe to say that the first protruding portion 240d (the spaced-apart portion 250d) is recessed in the direction away from the second protruding portion 240e (the spaced-apart portion 250e). The same applies to the second protruding portion 240e (the spaced-apart portion 250e).

As described above, the energy storage apparatus according to the present modification acquires substantially the same effect as the energy storage apparatus according to the modification as described above. In particular, in this modification, a distance between the spaced-apart portion 250d and the spaced-apart portion 250e is set to a constant value without being narrowed over the entire length in the Z-axis direction. As a result, it is possible to further prevent a liquid such as water from being accumulated between the first protruding portion 240d and the second protruding portion 240e. Accordingly, it is possible to further prevent the energy storage device 100 and the external conductive member from being conductive from each other. By setting a distance between the spaced-apart portion 250d and the spaced-apart portion 250e to a fixed value, even when the distance between the spaced-apart portion 250d and the spaced-apart portion 250e is set smaller than a maximum distance between the spaced-apart portion 250a and the spaced-apart portion 250b in the above-mentioned exemplary embodiment, it is possible to prevent a liquid such as water from being accumulated between the spaced-apart portion 250d and the spaced-apart portion 250e.

(Modification 2)

Next, a modification 2 of the above-mentioned exemplary embodiment will be described. Fig. 8 is a side view illustrating the configuration of two spacers 200 (a first spacer 200f and a second spacer 200g) that sandwich an energy storage device 100 according to the modification 2 of the present exemplary embodiment. Specifically, Fig. 8 is a view corresponding to the portion disposed on a Z-axis minus direction side in Fig. 5 or Fig. 6.

As illustrated in Fig. 8, the first spacer 200f according to the present modification has a first protruding portion 240f (a spaced-apart portion 250f), and the second spacer 200g has a second protruding portion 240g (a spaced-apart portion 250g). Other configurations are substantially the same as the corresponding configurations in the above-mentioned exemplary embodiment and hence, the detailed description of other configurations will be omitted.

A width of the first protruding portion 240f (the spaced-apart portion 250f) in the X-axis direction is set smaller than the width of the first protruding portion 240a (the spaced-apart portion 250a) of the first spacer 200a in the above-mentioned exemplary embodiment in the X-axis direction. That is, the spaced-apart portion 250f has: a first inclined surface 241f that is inclined in a direction that the first inclined surface 241f is disposed away from the second protruding portion 240g as the first inclined surface 241f is disposed away from the first side wall portion 220f; and a third inclined surface 242f that is inclined in a direction that the third inclined surface 242f approaches the second protruding portion 240g as the third inclined surface 242f is disposed away from the first side wall portion 220f. A distance between the first inclined surface 241f and the third inclined surface 242f is smaller than the distance between the first inclined surface 241a and the third inclined surface 242a of the spaced-apart portion 250a in the above-mentioned exemplary embodiment. The same applies to the second inclined surface 242g and a fourth inclined surface 241g of the second protruding portion 240g (the spaced-apart portion 250g).

As described above, the energy storage apparatus according to the present modification acquires substantially the same effect as the energy storage apparatus according to the modification as described above. In particular, in this modification, the maximum distance between the spaced-apart portion 250f and the spaced-apart portion 250g can be increased. As a result, it is possible to further prevent a liquid such as water from being accumulated between the first protruding portion 240f and the second protruding portion 240g. Accordingly, it is possible to further prevent the energy storage device 100 and an external conductive member from becoming conductive to each other.

(Modification 3)

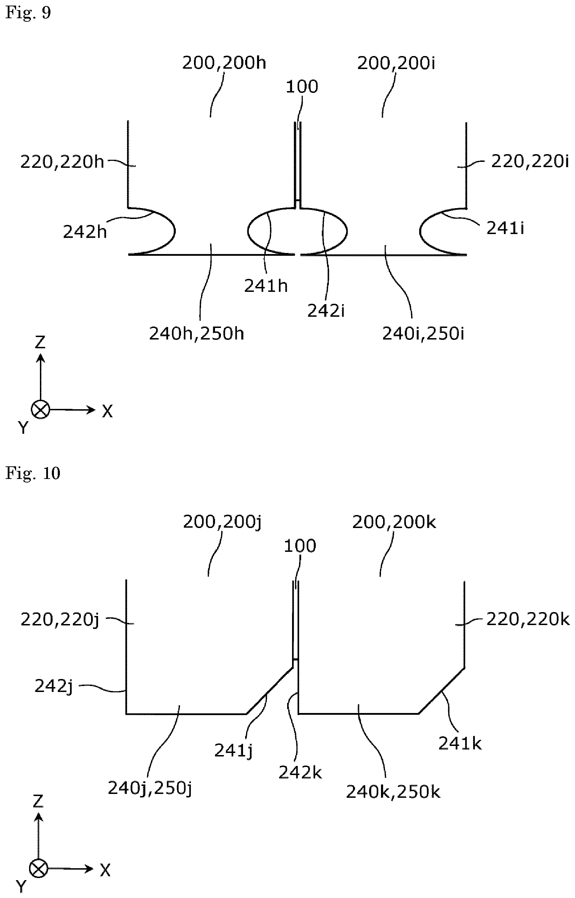

Next, a modification 3 of the above-mentioned exemplary embodiment will be described. Fig. 9 is a side view illustrating the configuration of two spacers 200 (a first spacer 200h and a second spacer 200i) that sandwich an energy storage device 100 according to the modification 3 of the present exemplary embodiment. Specifically, Fig. 9 is a view corresponding to a portion illustrated on a Z-axis minus direction side in Fig. 5 or Fig. 6.

As illustrated in Fig. 9, in this modification, the first spacer 200h has a first protruding portion 240h (a spaced-apart portion 250h), and the second spacer 200i has a second protruding portion 240i (a spaced-apart portion 250i). Other configurations are substantially the same as the corresponding configurations in the above-mentioned exemplary embodiment and hence, the detailed description of other configurations will be omitted.

The first protruding portion 240h (the spaced-apart portion 250h) has a curved surface that is recessed while being curved in the X-axis minus direction on a surface of the first protruding portion 240h on an X-axis plus direction side, and has a curved surface that is recessed while being curved in the X-axis plus direction on a surface of the first protruding portion 240h on an X-axis minus direction side. That is, the spaced-apart portion 250h has: a first inclined surface 241h having a curved shape that is inclined while being curved in a direction away from the second protruding portion 240i as the first inclined surface 241h is disposed away from the first side wall portion 220h; and a third inclined surface 242h having a curved shape that is inclined while being curved in a direction approaching the second protruding portion 240i as the third inclined surface 242h is disposed away from the first side wall portion 220h. The same applies to a second inclined surface 242i and a fourth inclined surface 241i of the second protruding portion 240i (the spaced-apart portion 250i).

The first protruding portion 240h (the spaced-apart portion 250h) has a shape recessed in the X-axis minus direction from the first side wall portion 220h. Accordingly, it is safe to say that the first protruding portion 240h has a recessed portion recessed toward a direction away from the second protruding portion 240i (the spaced-apart portion 250i). The same applies to the second protruding portion 240i (the spaced-apart portion 250i).

As described above, the energy storage apparatus according to the present modification acquires substantially the same effect as the energy storage apparatus according to the modification as described above. In particular, a distance between the spaced-apart portion 250h and the spaced-apart portion 250i is sharply increased. Accordingly, it is possible to more effectively prevent a liquid such as water from being accumulated between the first protruding portion 240f and the second protruding portion 240g. As a result, it is possible to further prevent the energy storage device 100 and an external conductive member from becoming conductive to each other.

(Modification 4)

Next, a modification 4 of the above-mentioned exemplary embodiment will be described. Fig. 10 is a side view illustrating the configuration of two spacers 200 (a first spacer 200j and a second spacer 200k) that sandwich an energy storage device 100 according to the modification 4 of the present exemplary embodiment. Specifically, Fig. 10 is a view corresponding to a portion in Fig. 5 or Fig. 6 on a Z-axis minus direction side.

As illustrated in Fig. 10, the first spacer 200j in this modification has a first protruding portion 240j (a spaced-apart portion 250j), and a second spacer 200k has a second protruding portion 240k (a spaced-apart portion 250k). Other configurations are substantially the same as the corresponding configurations in the above-mentioned exemplary embodiment and hence, the detailed description of other configurations will be omitted.

The first protruding portion 240j (the spaced-apart portion 250j) has a first inclined surface 241j substantially equal to the first inclined surface 241a of the first protruding portion 240a in the above-mentioned exemplary embodiment. On the other hand, the first protruding portion 240j has a side surface 242j which is parallel to a YZ plane instead of an inclined surface on a surface of the first protruding portion 240j on an X-axis minus direction side. The same applies to a fourth inclined surface 241k and a side surface 242k of the second protruding portion 240k (spaced-apart portion 250k).

As described above, the energy storage apparatus according to the present modification acquires substantially the same effect as the energy storage apparatus according to the modification as described above. In particular, in this modification, it is sufficient to form the inclined surface on only one surface of the spaced-apart portion 250j and the spaced-apart portion 250k. Accordingly, the first protruding portion 240j and the second protruding portion 240k can be easily formed.

(Modification 5)

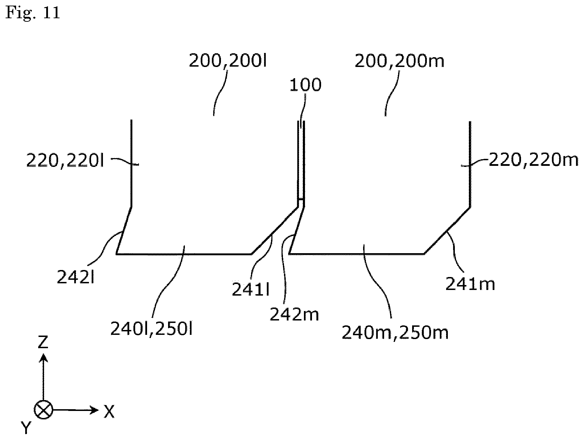

Next, a modification 5 of the above-mentioned exemplary embodiment will be described. Fig. 11 is a side view illustrating the configuration of two spacers 200 (a first spacer 200l and a second spacer 200m) that sandwich an energy storage device 100 according to the modification 5 of the present exemplary embodiment. Specifically, Fig. 11 is a view corresponding to a portion in Fig. 5 or Fig. 6 on a Z-axis minus direction side.

As illustrated in Fig. 11, in this modification, the first spacer 200l has a first protruding portion 240l (a spaced-apart portion 250l), and the second spacer 200m has a second protruding portion 240m (a spaced-apart portion 250m). Other configurations are substantially the same as the corresponding configurations in the above-mentioned exemplary embodiment and hence, the detailed description of other configurations will be omitted.

The first protruding portion 240l (the spaced-apart portion 250l) has a first inclined surface 241l that is substantially equal to the first inclined surface 241a in the above-mentioned exemplary embodiment on a surface of the first protruding portion 240l on an X-axis plus direction side. On the other hand, the first protruding portion 240l has a third inclined surface 242l that is inclined in a direction opposite to the inclined surface of the third inclined surface 242a on a surface of the first protruding portion 240l on an X-axis minus direction side. The same applies to a fourth inclined surface 241m and a second inclined surface 242m of the second protruding portion 240m (the spaced-apart portion 250m).

As described above, the energy storage apparatus according to the present modification acquires substantially the same effect as the energy storage apparatus according to the modification as described above. In particular, in this modification, one surface of the spaced-apart portion 250l and the spaced-apart portion 250m is inclined in the direction opposite to the corresponding one side of the spaced-apart portion 250l and the spaced-apart portion 250m in the above-mentioned exemplary embodiment. As described above, as the shape of the spaced-apart portion, various profiles can be taken.

(Modification 6)

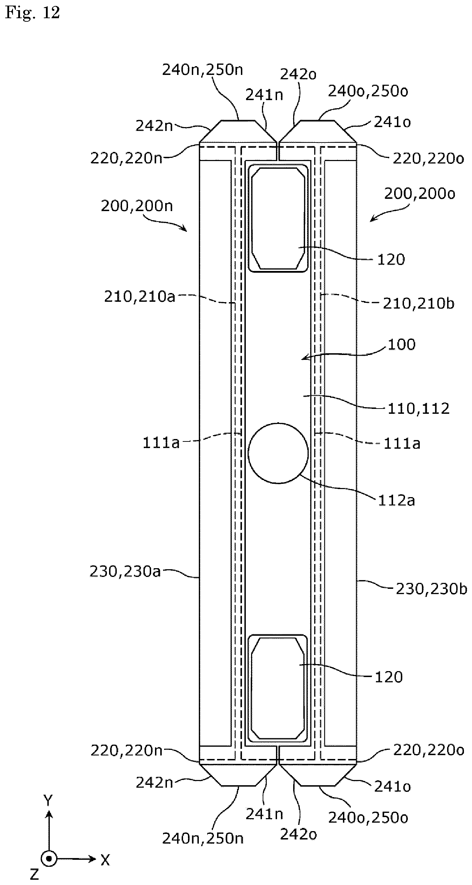

Next, a modification 6 of the above-mentioned exemplary embodiment will be described. Fig. 12 is a top plan view illustrating the configuration of two spacers 200 (a first spacer 200n and a second spacer 200o) that sandwich an energy storage device 100 according to the modification 6 of the present exemplary embodiment. Specifically, Fig. 12 is a plan view illustrating the configuration in a case where a state that the energy storage device 100 is sandwiched by two spacers 200 (the first spacer 200n and the second spacer 200o) is viewed from an upper side (a Z-axis plus direction).

As illustrated in Fig. 12, in the present modification, the first spacer 200n has a first protruding portion 240n (a spaced-apart portion 250n) in place of the first protruding portion 240a (the spaced-apart portion 250a) of the first spacer 200a in the above-mentioned exemplary embodiment. In the present modification, the second spacer 200o has a second protruding portion 240o (a spaced-apart portion 250o) in place of the second protruding portion 240b or 240c (the spaced-apart portion 250b or 250c) of the second spacer 200b or 200c in the above-mentioned exemplary embodiment. Other configurations are substantially the same as the corresponding configurations in the above-mentioned exemplary embodiment and hence, the detailed description of other configurations will be omitted.

The first protruding portion 240n is a protruding portion that protrudes in a Y-axis direction from a first side wall portion 220n. Two first protruding portions 240n are disposed corresponding to two first side wall portions 220n. That is, the first protruding portion 240n that protrudes in a Y-axis plus direction is disposed with respect to the first side wall portion 220n in a Y-axis plus direction, and the first protruding portion 240n that protrudes in a Y-axis minus direction is disposed with respect to the first side wall portion 220n on a Y-axis minus direction. Also with respect to the second protruding portion 240o, in the same manner, the second protruding portion 240o that protrudes in the Y-axis plus direction is disposed with respect to the second side wall portion 220o in the Y-axis plus direction, and the second protruding portion 240o that protrudes in the Y-axis minus direction is disposed with respect to the second side wall portion 220o in the Y-axis minus direction. As described above, in this modification, the Y-axis direction, the Y-axis plus direction, or the Y-axis minus direction is an example of the second direction, and the Z-axis direction is an example of the third direction.

In the same manner as the above-mentioned exemplary embodiment, the first protruding portion 240n has a first inclined surface 241n on a surface of the first protruding portion 240n on an X-axis plus direction side in a state where the first inclined surface 241n is inclined in a direction that the first inclined surface 241n is disposed away from the second protruding portion 240o as the first inclined surface 241n is disposed away from the first side wall portion 220n. On a surface of the first protruding portion 240n on an X-axis minus direction side, a third inclined surface 242n is formed in a state where the third inclined surface 242n is inclined in a direction that the third inclined surface 242n approaches the second protruding portion 240o as the third inclined surface 242n is disposed away from the first side wall portion 220n. In the same manner, on a surface of the second protruding portion 240o on an X-axis minus direction side, a second inclined surface 242o is formed in a state where the second inclined surface 242o is inclined in a direction that the second inclined surface 242o is disposed away from the first protruding portion 240n as the second inclined surface 242o is disposed away from the second side wall portion 220o. On a surface of the second protruding portion 240o on an X-axis plus direction side, a fourth inclined surface 241o is formed in a state where the fourth inclined surface 241o is inclined in a direction that the fourth inclined surface 241o approaches the first protruding portion 240n as the fourth inclined surface 241o is disposed away from the second side wall portion 220o.

With such a configuration, the first protruding portion 240n has a portion (a spaced-apart portion 250n) where a distance between the first protruding portion 240n and the second protruding portion 240o in the X-axis direction is larger than a distance between the first side wall portion 220n and the second side wall portion 220o in the X-axis direction. The second protruding portion 240o has a portion (a spaced-apart portion 250o) where a distance between the first protruding portion 240n and the second protruding portion 240o in the X-axis direction is larger than a distance between the first side wall portion 220n and the second side wall portion 220o in the X-axis direction.

As described above, the energy storage apparatus according to the present modification acquires substantially the same effect as the energy storage apparatus according to the modification as described above. In particular, in this modification, the first protruding portion 240n and the second protruding portion 240o protrude in the Y-axis direction. Accordingly, even when a conductive member such as a metal plate is disposed on a side (the Y-axis direction) of the energy storage device 100, it is possible to prevent the energy storage device 100 and the conductive member from becoming conductive to each other.

In this modification, various modifications such as the above-mentioned modifications 1 to 5 can be adopted. The first protruding portion 240n and the second protruding portion 240o may be provided to only one side of the first spacer 200n and the second spacer 200o in the Y-axis direction.

(Other modifications)

The energy storage apparatuses according to the present exemplary embodiment and the modifications of the present exemplary embodiment have been described heretofore. However, the present invention is not limited to the above-described exemplary embodiment and modifications. That is, the present exemplary embodiment and the modifications of the present exemplary embodiment are illustrative in all aspects, and are not limitative. The present invention includes all alterations which fall within the scope of claims or are considered equivalent to the present invention.

In the above-described exemplary embodiment and the modifications of the present exemplary embodiment, the first side wall portion of the first spacer is adopted as an example of the first wall portion, and the second side wall portion of the second spacer is adopted as an example of the second wall portion. However, the first bottom wall portion of the first spacer may be adopted as an example of the first wall portion, and the second bottom wall portion of the second spacer may be adopted as an example of the second wall portion. That is, the first bottom wall portion protrudes from the first body portion of the first spacer toward the second spacer along the energy storage device 100, and the second bottom wall portion protrudes from the second body portion of the second spacer toward the first bottom wall portion along the energy storage device 100. The first protruding portion of the first spacer protrudes from the first bottom wall portion in the Z-axis minus direction (the second direction), and the second protruding portion of the second spacer protrudes from the second bottom wall portion in the Z-axis minus direction (the second direction). The first protruding portion has the spaced-apart portion where the distance between the first protruding portion and the second protruding portion in the X-axis direction (first direction) is larger than the distance between the first bottom wall portion and the second bottom wall portion.

In the above-described exemplary embodiment and the modifications of the present exemplary embodiment, the entirety of the first protruding portion of the first spacer forms the spaced-apart portion. However, it is sufficient that at least a part of the first protruding portion has the spaced-apart portion. That is, it is sufficient that the first protruding portion has, at least at a part of the first protruding portion, the spaced-apart portion where the distance between the first protruding portion and the second protruding portion is larger than the distance between the first side wall portion 220a and the second side wall portion 220b. The same applies to the second protruding portion of the second spacer.

In the above-described exemplary embodiment and the modifications of the present exemplary embodiment, the first spacer and the second spacer which sandwich the energy storage device 100 cover substantially the entire surface of both long side surface portions 111a, both short side surface portions 111b and the bottom surface portion 111c of the energy storage device 100. However, it is sufficient that the first spacer and the second spacer cover only a part of the long side surface portions 111a, the short side surface portions 111b, and the bottom surface portion 111c without covering the entire surface of the long side surface portion 111a, the short side surface portions 111b and the bottom surface portion 111c.

In the above-mentioned exemplary embodiment and the modifications of the present exemplary embodiment, the description has been made on the premise that all spacers 200 have the above-mentioned configuration. However, some spacers 200 may not have the above-mentioned configuration.

In the above-mentioned exemplary embodiment and the modifications of the present exemplary embodiment, the description has been made with respect to the case where the energy storage device 100 and the spacer 200 are restrained by the end members 300 and the side members 400. However, neither the end members 300 nor the side members 400 may be disposed in the energy storage apparatus, and the energy storage devices 100 and the spacers 200 may be housed in an exterior body (a module case).

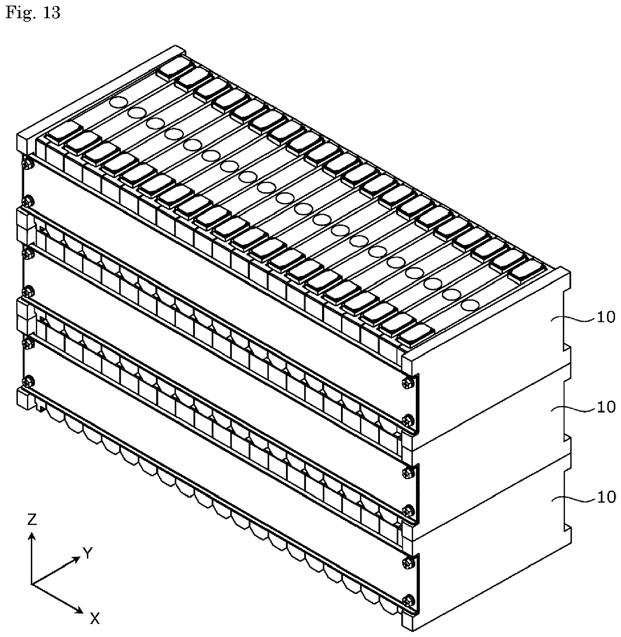

In the above-mentioned exemplary embodiment and the modifications of the present exemplary embodiment, the plurality of energy storage apparatuses 10 may be stacked in the Z-axis direction. Fig. 13 is a perspective view illustrating the configuration when the energy storage apparatuses 10 according to the modification 7 of the present exemplary embodiment are stacked in the vertical direction. Specifically, Fig. 13 illustrates the configuration of a module where three energy storage apparatuses 10 are stacked in the vertical direction. As described above, the technique of the present invention is also effective to the module where the plurality of energy storage apparatuses 10 are stacked in the vertical direction. In the illustration of the energy storage apparatus 10, bus bars, bus bar frames and a cover member (an upper lid) and the like are omitted.

The configurations which are formed by arbitrarily combining the respective constitutional elements which the above-mentioned exemplary embodiment and the above-mentioned modifications include also fall within the scope of the present invention.

The present invention can be realized not only as such an energy storage apparatus but also as the spacers 200 (the first spacer, the second spacer).

INDUSTRIAL APPLICABILITY

The present invention is applicable to an energy storage apparatus or the like that includes energy storage devices such as lithium ion secondary batteries.

DESCRIPTION OF REFERENCE SIGNS

10: energy storage apparatus
100: energy storage device
110: container
111: container body
111a: long side surface portion
111b: short side surface portion
111c: bottom surface portion
200: spacer
200a, 200d, 200f, 200h, 200j, 2001, 200n: first spacer
200b, 200c, 200e, 200g, 200i, 200k, 200m, 200o: second spacer
201: intermediate spacer
202: end spacer
210: spacer body portion
210a: first body portion
210b, 210c: second body portion
220: spacer side wall portion
220a, 220d, 220f, 220h, 220j, 2201, 220n: first side wall portion
220b, 220c, 220e, 220g, 220i, 220k, 220m, 220o: second side wall portion
230: spacer bottom wall portion
230a: first bottom wall portion
230b, 230c: second bottom wall portion
240: spacer protruding portion
240a, 240d, 240f, 240h, 240j, 2401, 240n: first protruding portion
240b, 240c, 240e, 240g, 240i, 240k, 240m, 240o: second protruding portion
241, 242: inclined surface
241a, 241f, 241h, 241j, 2411, 241n: first inclined surface
241b, 241g, 241i, 241k, 241m, 241o: fourth inclined surface
241c, 241d, 241e, 242c, 242d, 242e, 242j, 242k: side surface
242a, 242f, 242h, 2421, 242n: third inclined surface
242b, 242g, 242i, 242m, 242o: second inclined surface
243, 244, 245: recessed portion
250a, 250b, 250c, 250d, 250e, 250f, 250g, 250h, 250i, 250j, 250k, 2501, 250m, 250n, 250o: spaced-apart portion

**Claims**

1. An energy storage apparatus comprising: an energy storage device; and a first spacer and a second spacer that sandwich the energy storage device in a first direction, wherein

   the first spacer includes:

   a first body portion facing the energy storage device in the first direction;
   a first wall portion protruding from the first body portion toward the second spacer along the energy storage device; and
   a first protruding portion protruding from the first wall portion in a second direction that intersects with the first direction,

   the second spacer includes:

   a second body portion facing the energy storage device in the first direction;
   a second wall portion protruding from the second body portion toward the first wall portion along the energy storage device; and

a second protruding portion protruding from the second wall portion in the second direction, wherein

the first protruding portion includes a spaced-apart portion where a distance between the first protruding portion and the second protruding portion is larger than a distance between the first wall portion and the second wall portion in the first direction.

2. The energy storage apparatus according to claim 1, wherein the spaced-apart portion includes a first inclined surface that is inclined in a direction that the first inclined surface is disposed away from the second protruding portion as the first inclined surface is disposed away from the first wall portion.

3. The energy storage apparatus according to claim 1 or 2, wherein the second protruding portion includes a second inclined surface that is inclined in a direction that the second inclined surface is disposed away from the spaced-apart portion as the second inclined surface is disposed away from the second wall portion.

4. The energy storage apparatus according to any one of claims 1 to 3, wherein the first protruding portion includes a third inclined surface on a surface thereof opposite to the second protruding portion, the third inclined surface being inclined in a direction that the third inclined surface approaches the second protruding portion as the third inclined surface is disposed away from the first wall portion.

5. The energy storage apparatus according to any one of claims 1 to 4, wherein the spaced-apart portion includes a recessed portion recessed in a direction away from the second protruding portion.

6. The energy storage apparatus according to any one of claims 1 to 5, wherein
assuming that a distance between the first protruding portion and the second protruding portion in the first direction at the spaced-apart portion is set as a, a length of the spaced-apart portion in a third direction that intersects with the first direction and the second direction is set as b, a length of the spaced-apart portion in the second direction is set as h, a surface tension when a liquid that is disposed between the first protruding portion and the second protruding portion is brought into contact with air is set as $\sigma$, a contact angle between a wall surface of the spaced-apart portion and the liquid is set as $\theta$, density of the liquid is set as $\rho$, and gravitational acceleration is set as g, the distance a between the first protruding portion and the second protruding portion in the first direction at the spaced-apart portion satisfies a following formula.

[Formula 1]

$$a > \frac{4b\sigma \cdot \cos\theta}{b\rho gh - 4\sigma \cdot \cos\theta}$$

Fig. 1

Fig. 2

Fig. 3

Fig. 4

(a)

210

220

220

230

242

240 241

200,201

(b)

220

210

243

242

241

220

240

243

230

242

241

240

Fig. 5

Fig. 6

Fig. 7

200,200d          200,200e
                100

220,220d                           220,220e

242d                               241e

241d

242e

240d,250d          240e,250e

Z
↑
⊗ → X
Y

Fig. 8

200,200f          200,200g
                100

220,220f                           220,220g

242f                               241g

241f

242g

240f,250f          240g,250g

Z
↑
⊗ → X
Y

Fig. 9

200,200h      200,200i

100

220,220h

242h

220,220i

241i

241h

242i

240h,250h      240i,250i

Z

Y ⊗ → X

Fig. 10

200,200j      200,200k

100

220,220j

220,220k

242j

241j

242k

241k

240j,250j      240k,250k

Z

Y ⊗ → X

Fig. 11

Fig. 12

Fig. 13

Fig. 14

## INTERNATIONAL SEARCH REPORT

| International application No. |
|---|
| PCT/JP2020/021396 |

A. CLASSIFICATION OF SUBJECT MATTER
Int. Cl. H01M2/10(2006.01)i
FI: H01M2/10 S, H01M2/10 E

According to International Patent Classification (IPC) or to both national classification and IPC

B. FIELDS SEARCHED

Minimum documentation searched (classification system followed by classification symbols)
Int. Cl. H01M2/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2016-213063 A (GS YUASA INTERNATIONAL LTD.) 15 December 2016, paragraphs [0047]-[0063], fig. 1, 2, 4, 5 | 1-6 |
| X | JP 2008-4289 A (TOYOTA MOTOR CORP.) 10 January 2008, paragraphs [0042], [0043], fig. 9 | 1, 5-6 |
| X | JP 2015-201288 A (GS YUASA INTERNATIONAL LTD.) 12 November 2015, paragraphs [0037]-[0040], [0069], fig. 3, 9 | 1-4, 6 |
| X | JP 2015-220218 A (HITACHI AUTOMOTIVE SYSTEMS, LTD.) 07 December 2015, paragraphs [0067], [0073]-[0080], fig. 14-17 | 1-4, 6 |

☒ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17.07.2020 | 28.07.2020 |

| Name and mailing address of the ISA/<br>    Japan Patent Office<br>    3-4-3, Kasumigaseki, Chiyoda-ku,<br>    Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
|---|
| PCT/JP2020/021396 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-54112 A (GS YUASA INTERNATIONAL LTD.) 14 April 2016 | 1-6 |

Form PCT/ISA/210 (continuation of second sheet) (January 2015)

**INTERNATIONAL SEARCH REPORT**
Information on patent family members

| International application No. |
| --- |
| PCT/JP2020/021396 |

| Patent Documents referred to in the Report | Publication Date | Patent Family | Publication Date |
| --- | --- | --- | --- |
| JP 2016-213063 A | 15.12.2016 | US 2016/0329532 A1 paragraphs [0060]-[0076], fig. 1, 2, 4, 5<br>US 2017/0110700 A1<br>DE 102016207837 A1<br>CN 106129272 A | |
| JP 2008-4289 A | 10.01.2008 | (Family: none) | |
| JP 2015-201288 A | 12.11.2015 | (Family: none) | |
| JP 2015-220218 A | 07.12.2015 | (Family: none) | |
| JP 2016-54112 A | 14.04.2016 | (Family: none) | |

Form PCT/ISA/210 (patent family annex) (January 2015)

**EP 3 996 188 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013041708 A